# EUROPÄISCHE PATENTSCHRIFT

(11) **EP 2 194 286 B1**
(45) Veröffentlichungstag und Bekanntmachung des Hinweises auf die Patenterteilung: **22.02.2012**
(21) Anmeldenummer: 08021115.4
(22) Anmeldetag: 04.12.2008
(51) Int. Cl.: F16D 23/06

(54) **Synchronisiereinrichtung**
Synchronising device
Dispositif de synchronisation

(43) Veröffentlichungstag der Anmeldung: 09.06.2010
(73) Patentinhaber: Hoerbiger Antriebstechnik GmbH, 86956 Schongau (DE)
(72) Erfinder: Notz, Robert, 86956 Schongau (DE); Echtler, Peter, 86956 Schongau (DE)
(74) Vertreter: Kitzhofer, Thomas

(56) Entgegenhaltungen:
- EP-A- 1 517 064
- EP-A- 1 750 025
- WO-A-2006/067558
- JP-A- 62 052 241

## Beschreibung

Die Erfindung betrifft eine Synchronisiereinrichtung für KFZ-Schaltgetriebe gemäß dem Oberbegriff des Anspruches 1.

Eine derartige Synchronisiereinrichtung ist aus der DE 10 2004 036 507 B3 bekannt.

Synchronisiereinrichtungen können unter Umständen ein starkes Geräusch aufgrund von Spiel im Bereich der Mitnehmernocken des äußeren Synchronrings und der Synchronnabe bzw. des Synchronkörpers entwickeln, was als "Getrieberasseln" bezeichnet wird. Dieses Getrieberasseln kann sowohl durch axiales als auch durch radiales Spiel bzw. Kippen des Synchronrings hervorgerufen werden. Bei der gattungsgemäßen Synchronisiereinrichtung wird zur Vermeidung eines derartigen Getrieberasseln ein Ausgleichshebel um eine Zentralachse einer Druckfeder und/oder eines Rastkörpers schwenkbar gelagert, was eine relativ aufwendige Konstruktion darstellt.

Aus der DE-AS 24 31 324 ist eine Synchronisiereinrichtung bekannt, bei der zur Vermeidung von Drehschwingungen der Reibringe diese gegensinnig gekoppelt werden, wodurch sich die Momentenwirkungen von Drehbeschleunigungen der beiden Reibringe untereinander ausgleichen sollen.

Die EP 1 517 064 A2 zeigt ein Kraftfahrzeug-Schaltgetriebe mit einer gattungsgemäßen Synchronisiereinrichtung, die einen Synchronring und ein Druckstück umfasst. In einer Ausführungsform weist der Synchronring eine trapezförmige Ausnehmung und das Druckstück einen trapezförmigen Vorsprung auf, der in die Ausnehmung eingreift. Zwischen dem Synchronring und dem Druckstück entsteht bei der Synchronisation des Schaltgetriebes eine Umfangskraft, wobei die zusammenwirkenden Trapezflächen der Ausnehmung und des Vorsprungs so geneigt sind, dass aus dieser Umfangskraft eine Axialkraft resultiert. Der Synchronring wird durch diese Axialkraft vom Druckstück weg und gegen eine Reibfläche des mit einem Gangrad gekoppelten Kupplungskörpers beaufschlagt, weshalb die über eine Schaltmuffe eingeleitete, manuelle Schaltkraft reduziert werden kann.

Es ist Aufgabe der vorliegenden Erfindung, eine Synchronisiereinrichtung der im Oberbegriff des Anspruches 1 angegebenen Art zu schaffen, mit der auf einfache Art und Weise die Relativbewegungen der Synchronringe die zu Getrieberasseln, erhöhtem Schleppmoment, Schädigungen des Reibbelages und zu Dauerschwingbrüchen der Indexnocken führen können, zu vermeiden.

Die Lösung dieser Aufgabe erfolgt durch die Merkmale des Anspruchs 1.

Hierdurch wird erreicht, dass der Synchronring bzw. Reibring im Bereich der Synchronnabe bzw. des Synchronkörpers definiert gegen die Synchronnabe gedrückt wird. Dies reduziert bzw. eliminiert das zuvor erläuterte Geräuschproblem.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigen:
- Fig. 1: den generellen Aufbau einer erfindungsgemäßen Synchronisiereinrichtung,
- Fig. 2-4: den Aufbau und die Wirkungsweise des erfindungsgemäßen Druckstücks im Zusammenwirken mit einem hinterschnittenen Indexlappen eines Synchronrings.

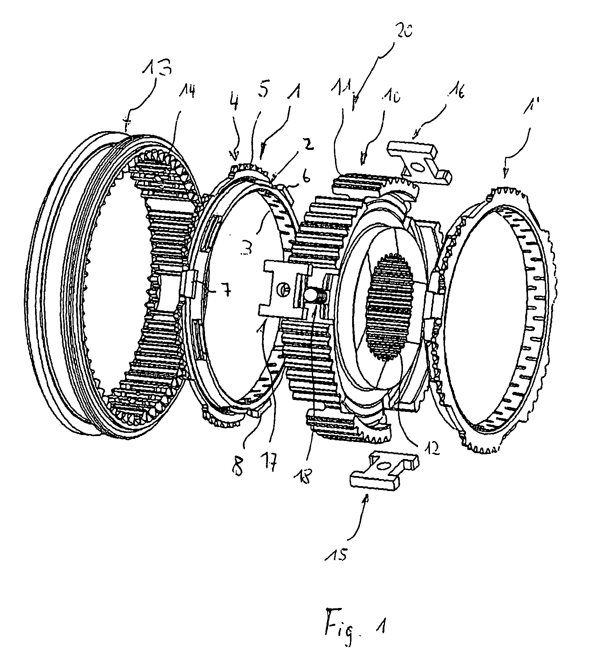

Fig. 1 zeigt eine Synchronisiereinrichtung 20 für ein Handschaltgetriebe eines KFZ, zur Erläuterung des erfindungsgemäßen Aufbaus einer derartigen Anordnung.

Die Synchronisiereinrichtung 20 weist zunächst einen Synchronring 1 auf, der einen Ringkörper 2 mit einer inneren Reibfläche 3 umfasst. Die Reibfläche ist im Beispielsfalle konisch ausgebildet.

Am Außenumfang des Ringkörpers 2 ist eine Sperrverzahnung 4 ausgebildet, die eine Mehrzahl von Sperrzähnen 5 aufweist. Die Sperrzähne 5 sind umfangsseitig am Ringkörper 2 verteilt angeordnet.

Ferner ist ein in Fig. 1 nicht dargestellter Kupplungskörper vorgesehen, der einen Reibkonus aufweist, der mit der Reibfläche 3 des Synchronrings 1 beim Schaltvorgang zusammenwirkt. Ferner weist der Kupplungskörper eine umfangsseitig angeordnete Schaltverzahnung auf.

Ein ebenfalls nicht dargestelltes Getriebe- bzw. Losrad ist mit dem Kupplungskörper formschlüssig verbunden und ist auf einer in Fig. 1 nicht näher dargestellten Getriebewelle mittels eines Lagers drehbeweglich angeordnet. Das Losrad steht dauerhaft mit einem in Fig. 1 ebenfalls nicht dargestellten weiteren Zahnrad in Eingriff, das drehfest auf einer Vorgelegewelle befestigt ist. Das Losrad mit seinem Gegenrad bestimmt das Übersetzungsverhältnis des jeweils zu schaltenden Ganges.

Ferner zeigt Fig. 1 einen Synchronkörper bzw. eine Synchronnabe 10 mit einer Innen- und einer Außenverzahnung 12 bzw. 11.

Neben dem Synchronkörper 10 ist eine Schaltmuffe 13 dargestellt, die eine Innenverzahnung 14 aufweist. Schließlich sind in Fig. 1 insgesamt drei Druckstücke 15, 16, 7 mit Kugel bzw. Kugelbolzen und Druckfedern dargestellt, von denen eine Kombination mit den Bezugsziffern 18 bezeichnet ist. Auf der rechten Seite der Fig. 1 ist nochmals ein Synchronring 1' dargestellt, der in seinem Aufbau dem zuvor beschriebenen Synchronring entspricht.

Der Synchronkörper 10 ist fest auf der nicht dargestellten Getriebewelle des Schaltgetriebes angeordnet und die Schaltmuffe 13 ist auf dem Synchronkörper 10 geführt.

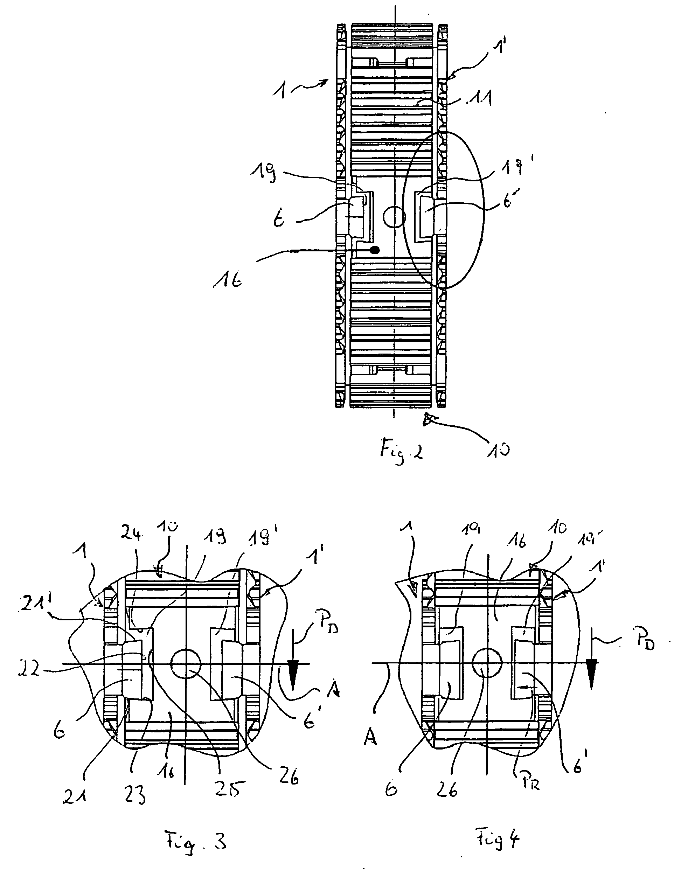

Um bei einer derartigen Synchronisiereinrichtung 20 das eingangs erläuterte Getrieberasseln zu vermeiden, ist erfindungsgemäß eine besondere Gestaltung des Synchronrings 1, 1' und der Druckstücke 15, 16, 17 vorgesehen, die nachfolgend anhand der Fig. 2 bis 4 beschrieben werden wird.

In Fig. 2 ist von der Synchronisiereinrichtung 20 nur der Synchronkörper 10 und die beiden Synchronringe 1, 1' dargestellt, die an den beiden Stirnseiten des Synchronkörpers 10 angeordnet sind, wie sich dies im Einzelnen aus der Fig. 2 ergibt. Ferner ist von den Druckstücken 15, 16 und 17 das Druckstück 16 sichtbar, das in einer Aussparung der Außenverzahnung 11 des Synchronkörpers 10 angeordnet ist. Dieses Druckstück 16 wird nachfolgend repräsentativ für sämtliche Druckstücke der erfindungsgemäßen Synchronisiereinrichtung 20 beschrieben.

Aus Fig. 2 ergibt sich, dass die Indexlappen 6 bzw. 6' der Synchronringe 1 bzw. 1' in zugeordnete Aufnahmeausnehmungen 19, 19' mit Spiel eingreifen. Dies wird nachfolgend anhand der Fig. 3 und 4 näher erläutert. Hierbei ist zu berücksichtigen, dass der Aufbau der Synchronringe 1, 1' identisch ist, so dass nachfolgend zunächst auf die Ausgestaltung des Synchronrings 1 Bezug genommen wird, die repräsentativ für beide Synchronringe ist.

Demgemäß weist der Synchronring 1 den Indexlappen 6 auf, wobei hervorzuheben ist, dass sämtliche Indexlappen 6, 7, 8 identisch ausgebildet sind, so dass nachfolgende Beschreibung auch für die beiden anderen Indexlappen gilt.

Wie sich aus der Fig. 3 und 4 ergibt, hat der Indexlappen 6 eine trapezförmige Kontur, die zur Achse A, die der Längsachse der Synchroneinheit 20 entspricht, geneigte Seitenwände 21, 21' und eine zumindest im Wesentlichen im rechten Winkel zur Achse A ausgelegte Stirnwand 22 umfasst. Aus dieser Konfiguration ergibt sich die trapezförmige Ausgestaltung des Indexlappens 6, die mit anderen Worten zu einer Hinterschneidung führt.

Das Druckstück 16 wiederum weist eine an die Form des Indexlappens 6 angepasste Aufnahmeausnehmung 19 auf, in die der Indexlappen 6 ragt. Die Aufnahmeausnehmung 19 ist mit geneigten Begrenzungswänden 23, 24 versehen, wobei die Neigung der Begrenzungswände 23 und 24 an die Neigung der Seitenwände 21, 21' des Indexlappens 6 angepasst ist. Ferner wird die Aufnahmeausnehmung 19 von einer stirnseitigen weiteren Begrenzungswand 25 gebildet. Die gegenüberliegende Aufnahmeausnehmung 19' für den Indexlappen 6' ist entsprechend ausgebildet, so dass sich die aus der Draufsicht der Fig. 3 und 4 ersichtliche Doppel-T-Ausbildung für das Druckstück 16 ergibt. Dieses weist mittig ferner eine Durchtrittsausnehmung 26 für den Kugel bzw. Kugelbolzen der Kugel bzw. Kugelbolzen-Druckfeder-Anordnung 18 auf.

Aufgrund der zuvor beschriebenen Ausbildung des Indexlappens 6 und der Aufnahmeausnehmung 19 ergeben sich bei diesen beiden Teilen korrespondierende Hinterschneidungen, die dazu ausgenutzt werden können, dass sich bei einer Relativdrehung zwischen der Synchronradnabe 10 und dem Synchronring 1 und 1' in Richtung des Pfeils P_{D} in Fig. 4 eine resultierende Kraft P_{R} ergibt, die in Richtung der Achse A wirkt und somit, wie sich aus der Zusammenschau der Fig. 3 und 4 ergibt, die Synchronringe 1 und 1' an die Synchronnabe 10 anzieht, was es möglich macht, ein Getrieberasseln zu minimieren oder gänzlich zu vermeiden, wie dies eingangs erläutert worden ist.

Aus der vorangehenden Erläuterung der Erfindung ergibt sich, dass (im Vergleich zum eingangs erläuterten Stand der Technik, bei dem die Indexlappen an axial ausgerichteten Anschlagsflächen an der Synchronnabe geführt sind) der Anschlag der Indexlappen des Synchronringes erfindungsgemäß über die Druckstücke dargestellt wird. Die hierfür vorgesehenen Hinterschneidungen sind einfach und kostengünstig herstellbar. Der Umschlagwinkel und damit die Sperrposition wird ferner vorteilhafterweise nicht über die Axialposition des Synchronrings verändert, was bei einem Vorsehen von Hinterschneidungen an der Synchronnabe der Fall wäre.

Wie zuvor bereits beschrieben, werden durch die Hinterschneidungen die beiden Synchronringe 1, 1' axial an die Synchronnabe 10 gezogen. Dadurch werden Geräusche und Schleppmomente in der Synchronisierung zumindest reduziert, wenn nicht gänzlich vermieden.

Neben der voranstehenden schriftlichen Offenbarung der Erfindung wird hiermit explizit auf deren zeichnerische Darstellung in den Fig. 1 bis 4 verwiesen.

### Bezugszeichenliste

- 1, 1': Synchronring
- 2: Ringkörper
- 3: Reibfläche
- 4: Sperrverzahnung
- 5: Sperrzähne
- 6, 6', 7, 8: Indexlappen
- 10: Synchronkörper
- 11: Außenverzahnung
- 12: Innenverzahnung
- 13: Schaltmuffe
- 14: Innenverzahnung
- 15, 16, 17: Druckstücke
- 18: Kugel bzw. Kugelbolzen-Druckfeder-Anordnung
- 19, 19': Aufnahmeausnehmung
- 20: Synchronisiereinrichtung
- 21, 21': Seitenwände (geneigt zur Achse A)
- 22: Stirnwand
- 23, 24: Begrenzungswände (geneigt zur Achse A)
- 25: stirnseitige Begrenzungswand
- 26: Durchtrittsausnehmung für Kugel bzw. Kugelbolzen
- A: Achse
- **P_{D}**: Drehrichtungspfeil
- P_{R}: Reaktionskraftpfeil

## Patentansprüche

1. Synchronisiereinrichtung (20)
- mit einem Synchronkörper (10), der eine Außenverzahnung (11) aufweist, in der zumindest ein Druckstück (15, 16, 17) angeordnet ist;
- mit einer auf dem Synchronkörper (10) geführten Schaltmuffe (13), und
- mit zumindest einem Synchronring (1, 1'), der zumindest einen Indexlappen (6, 7, 8) aufweist,
**dadurch gekennzeichnet, dass**
das Druckstück (15, 16, 17) eine dem Synchronring (1, 1') zugewandte trapezförmige Aufnahmeausnehmung (19, 19') aufweist, in die der entsprechend trapezförmig ausgebildete Indexlappen (6, 6') eingreift,
wobei die trapezförmige Aufnahmeausnehmung (19, 19') und der trapezförmige Indexlappen (6, 6') korrespondierende Hinterschneidungen ausbilden, durch die der wenigstens eine Synchronring (1, 1') zum Synchronkörper (10) hin gezogen werden kann.

2. Synchronisiereinrichtung nach Anspruch 1, **dadurch gekennzeichnet, dass** jeder Synchronring (1, 1') drei Indexlappen (6, 7, 8) aufweist, die in einem Winkelabstand von 120° am Ringkörper (2) angeordnet sind.

3. Synchronisiereinrichtung nach Anspruch 1 oder 2, **dadurch gekennzeichnet, dass** drei Druckstücke (15, 15, 17) vorgesehen sind, die in Ausnehmungen der Außenverzahnung (11) des Synchronkörpers (10) in einem Abstand von 120° zueinander angeordnet sind.

## Claims

1. A synchronizing device (20) comprising
- a synchronizer body (10) including an external toothing (11) in which at least one thrust piece (15, 16, 17) is arranged;
- a shifting sleeve (13) guided on the synchronizer body (10), and
- at least one synchronizer ring (1, 1') including at least one index tab (6, 7, 8),
**characterized in that**
the thrust piece (15, 16, 17) includes a trapezoidal receiving recess (19, 19') which faces the synchronizer ring (1, 1') and into which the correspondingly trapezoidally formed index tab (6, 6') engages,
the trapezoidal receiving recess (19, 19') and the trapezoidal index tab (6, 6') forming corresponding undercuts by means of which the at least one synchronizer ring (1, 1') can be drawn towards the synchronizer body (10).

2. The synchronizing device according to claim 1, **characterized in that** each synchronizer ring (1, 1') includes three index tabs (6, 7, 8), which are arranged on the annular body (2) at an angular distance of 120 degrees.

3. The synchronizing device according to claim 1 or 2, **characterized in that** three thrust pieces (15, 16, 17) are provided which are arranged in recesses of the external toothing (11) of the synchronizer body (10) at a distance of 120 degrees in relation to each other.

## Revendications

1. Dispositif de synchronisation (20), comportant
- un corps de synchronisation (10) qui présente une denture extérieure (11) dans laquelle est agencée au moins une pièce de pression (15, 16, 17),
- un manchon coulissant (13) guidé sur le corps de synchronisation (10), et
- au moins une bague de synchronisation (1, 1') présentant au moins une patte d'indexage (6, 7, 8),
**caractérisé en ce que**
la pièce de pression (15, 16, 17) présente un évidement de réception (19, 19') trapézoïdal qui fait face à la bague de synchronisation (1, 1') et dans lequel s'engage la patte d'indexage (6, 6') réalisée de manière correspondante en forme trapézoïdale,
l'évidement de réception (19, 19') trapézoïdal et la patte d'indexage (6, 6') trapézoïdale formant des contre-dépouilles correspondantes au moyen desquelles ladite au moins une bague de synchronisation (1, 1') peut être tirée vers le corps de synchronisation (10).

2. Dispositif de synchronisation selon la revendication 1, **caractérisé en ce que** chaque bague de synchronisation (1, 1') présente trois pattes d'indexage (6, 7, 8) qui sont agencées sur le corps annulaire (2) à une distance angulaire de 120°.

3. Dispositif de synchronisation selon la revendication 1 ou 2, **caractérisé en ce qu'**il est prévu trois pièces de pression (15, 16, 17) qui sont agencées dans des évidements de la denture extérieure (11) du corps de synchronisation (10) à une distance de 120° les unes par rapport aux autres.
